# EUROPEAN PATENT APPLICATION

(11) **EP 2 644 992 A1**
(43) Date of publication of application: **02.10.2013**
(21) Application number: 12161318.6
(22) Date of filing: 26.03.2012
(51) Int. Cl.: F23D 14/72

(54) **Burner arrangement, combustor, gas turbine engine and method for determining a rate of soot deposition in gas turbine combustors**

(71) Applicant: Siemens Aktiengesellschaft, 80333 München (DE)
(72) Inventor: Pearce, Robert, Lincoln Wickenby, LN3 5AB (GB)

(57) **Abstract**

In accordance with the invention there is provided a burner arrangement (100) for a combustor of a gas turbine engine comprising a burner body (1) comprising a cut-out (14) and a burner face (13), the cut-out (14) piercing the burner face (13), a sensor device (20) installed in the cut-out (14) and comprising a first part (21) being fixed to the burner body (1) and comprising a second part (22), the second part (22) comprising a tip surface (23), the sensor device (20) being configured such that the second part (22) is able to move relative to the burner face (13), and further comprising a data evaluation unit (30). The first part (21) is fixed to the burner body (1) such that it is agitated by vibrations of the burner body (1) during operation of the gas turbine engine, The burner face (13) and the tip surface (23) are arranged such that they are affected by deposition (24, 25) of combustion residues during operation of the gas turbine engine. The sensor device (20) is arranged to generate information signals (31) corresponding to a magnitude and/or a period of the oscillation of the second part (22) relative to the first part (21). The data evaluation unit (30) is arranged to collect the received information signals (31) over a period of time and to determine a grade of deposition (24, 25) of combustion residues on the burner face (13) by evaluating the collected information signals (31).

## Description

### FIELD OF THE INVENTION

The present invention relates generally to a burner arrangement for a combustor of a gas turbine engine, particularly for determining whether residues or soot are deposited.

### BACKGROUND OF THE INVENTION

For gas turbine engines, there is a main target to provide low emission combustion systems. These systems may burn both natural gas and liquid fuel, e.g. gas oil, diesel, kerosene or heating oil. There may be problems with liquid fuel at low power in that combustion may be inefficient and there may be a built-up of soot in the combustor, particularly the combustor head.

At low powers combustors are inherently inefficient typically due to fixed fuel nozzle geometry and this can lead to deposition of soot or "coking" with extended running on liquid fuel. The situation may be worse with dry low emission (DLE) combustion systems due to higher maximum operating pressure in the fuel supply, producing a fuel spray with smaller droplets. Even though running a machine at high power is most effective, there may be reasons why a machine will be operated at low speed, for example due to site limitations, e.g. whilst the installation is not completed or fully commissioned.

Coking can possibly also be experienced with poor quality liquid fuels.

To minimise deposition and to time maintenance accurately it would be advantageous to measure deposition. Evaluation of deposition can be performed by running the engine at low power conditions for a specific time, dismantling the combustion system afterwards and manually inspecting it. This is both slow and labour intensive.

It is an object of the invention to provide means for measuring deposition in a combustor without dismantling the combustor.

### SUMMARY OF THE INVENTION

This objective is achieved by the independent claims. The dependent claims describe advantageous developments and modifications of the invention.

In accordance with the invention there is provided a burner arrangement for a combustor of a gas turbine engine comprising a burner body comprising a cut-out and a burner face, the cut-out piercing the burner face. The burner arrangement further comprises a sensor device installed in the cut-out and comprising a first part being fixed to the burner body and comprising a second part, the second part comprising a tip surface, the sensor device being configured such that the second part is able to move relative to the burner face. Besides, the burner arrangement also comprises a data evaluation unit. According to the invention the first part is fixed to the burner body such that it is agitated by vibrations of the burner body during operation of the gas turbine engine. Furthermore the burner face and the tip surface are arranged such that they are affected by deposition of combustion residues during operation of the gas turbine engine. The sensor device is arranged to generate information signals corresponding to a magnitude and/or a period of the oscillation of the second part relative to the first part. Additionally the data evaluation unit is arranged to collect the received information signals over a period of time and to determine a grade of deposition of combustion residues on the burner face by evaluating the collected information signals.

This burner arrangement is particularly advantageous as manual labour steps for evaluating the deposition are not needed anymore. It allows determination of deposition within the combustor of a gas turbine engine. In this location measurements are difficult to be taken due to the pressure and temperatures involved within the combustor, for example 15 bar and circa 300 °C for or similar conditions. Furthermore the invention allows to keep all parts of the burner arrangement in place even at full power of the gas turbine engine, which could lead to burner temperature up to 900 °C or higher, which a lot of material or other types of sensor devices would not withstand. Particularly the sensor device and specifically the second part may withstand high temperatures. For this a high temperature sensor should be used. This may be possible by employing optics at second part (i.e. at the hot end) .

According to the invention only the tip surface of the sensor device need to be adapted to high temperatures.

A burner body according to the invention may be a particularly solid body. Compared to the burner body the sensor device may be light weight, e.g. less than 1/100 of the weight of the burner body.

The sensor device - preferably the first part of the sensor device - preferably will be in direct surface contact with a surface of the cut-out. Alternatively it will be fixed by fixation means. Both options allow a coupling between the sensor device and the burner body such that vibrations of the burner body directly affect the first part of the sensor device.

The sensing element of the sensor device may particularly at the hot end of the probe and may preferably use optical and/or electrical means to take measurements.

The cut-out is preferably a through hole through the burner body. Possibly the cut-out may also be a blind hole. As said, the cut-out pierces the burner face, thus allowing an inserted sensor device to access a combustion chamber or a pre-chamber of the combustor.

The burner arrangement preferably is arranged such that only the tip section or a part applied on top of the tip section is in direct contact to the combustion chamber.

The burner face and the tip section of the sensor device preferably are walls facing the flame of the combustor. Both may be affected by deposition of combustion residues, for example coking, deposition of soot, unburned hydrocarbons. This deposition may particularly take place when using liquid fuel, potentially when running the machine not at full load.

A mentioned, the sensor device is configured such that the second part is able to move relative to the burner face. The second part is excitable by vibrations. It may swing in the plane of the burner face. A movement of the second part particularly takes place relative to the first part. The sensor device may be arranged such that the second part may able to oscillate.

The sensor device will provide signals that correspond or reflect the movement of the second part via information signals to the evaluation unit. The information signals may be electrical signals or also optical data transmission. Information may be analog or digitally encoded. The information signals correspond to the magnitude and/or the period of the oscillation of the excited second part relative to the first part. The information signals may be derived from optical interference measurements.

Regarding the oscillations that are at least two ways of noticing the difference in oscillations: First, a change in frequency and/or amplitude in the oscillation, or second, a change in active force to maintain the frequency and/or amplitude of the oscillation.

The data evaluation unit may receive the information signals - permanently, on demand, or periodically. It is arranged to collect the received information signals over a period of time, this period of time being preferably predetermined. The period of time may be configurable. The data evaluation unit determines a grade of deposition of combustion residues on the burner face by evaluating the collected information signals. This evaluation can be done by different means. The amount of deposited material (i.e. the mass) may be calculated based on the information signals and/or the information signals may be compared with predefined threshold values. Mathematical methods like integration, derivation, Fourier transformation or others may be used. The evaluation maybe linked to engine speed, ambient temperature or load and to information regarding whether this is a start-up/transient procedure or a stable condition. For that further input signals may be obtained by different sensors or different control units. The evaluation unit may also determine a period of vibration or a change of the period of vibration. Possibly the evaluating may be performed by comparing received information signals from the evaluation unit to target values. Also mathematical curves may be compared, i.e. a curve of actually received information signals - or a derived curved from that - with a previously stored curve. Alternatively or additionally thresholds may be defined as reference for the information signals which indicate a specific amount of deposits on the burner face.

The invention allows recognising changes in vibration. As only a grade of deposition on the tip surface is determined, a correlation between the deposition on the tip surface and the deposition on the burner face may be needed. For this possibly also calibration of the sensor device may be needed.

In an embodiment the second part may comprise a diaphragm and the tip surface is a surface of the diaphragm. The diaphragm may be arranged to collect combustion residues. Preferably the diaphragm is arranged to collect an enhanced amount of deposits compared to deposits on the burner face. The enhanced amount may be able to correlate to the deposited amount on the burner face as the deposition on the diaphragm relates to the effective deposition on the burner face - which is in fact the wanted information. Thus, the measurement is done indirectly with a component that allows a faster build-up of depositions.

In an embodiment the second part may comprise also different types of collectors as the tip section of the second part.

In an embodiment the surface of the diaphragm may be oriented parallel to the burner face. Particularly the surface of the diaphragm may lie within the plane of the burner face.

In a preferred embodiment the tip section may be of a material and/or of a surface structure adhesive to particles of combustion residues.

In a further embodiment the sensor device may comprise an optical system for measuring a diversion of light transmission and/or for measuring optical interferences of light transmissions. The light beam may possibly be visible or in a non-visible frequency range. Also a laser beam or LED pulse could be used.

Alternatively or additionally the sensor device may comprise at least one strain gauge attached to the second part.

In a preferred embodiment the burner body and/or the sensor device may be configured such that the burner arrangement comprises a circumferential clearance between the second part and surrounding walls to allow the movements relative to the burner face, the surrounding walls being particularly walls of the cut-out. The surrounding walls may also be a casing of the sensor device. Preferably the second part may be attached to the first part via an elongated flexible element that allow displacement or oscillation about a longitudinal axis of the sensor device.

According to an embodiment implementing the inventive idea the first part and/or the second part may be configured such that the second part is excited from vibrations of the burner body during operation of the gas turbine engine.

Furthermore the first part and/or the second part may be configured such that the second part is actively excited - in fact the first part may be actively excited and as a consequence the second part is excited -, e.g. from vibrations of rotating parts of the gas turbine engine - e.g. the rotating shaft - during operation of the gas turbine engine. Thus, the second part will be oscillating with higher amplitude as it would if only excited by the burner body due to deposition. This active excitation may also be caused due to combustion dynamics. According to this concept, a reference frequency may be provided. Also a base amplitude can be applied to the second part by this concept.

Particularly, the burner arrangement may comprise a vibration stimulating device for exciting the second part. Preferably a constant oscillation will be generated, which will change once deposition of material on the tip surface takes place.

The invention is directed to a burner arrangement as described before. Furthermore also a combustor comprising such burner arrangement is claimed.

Preferably such a combustor may further comprise at least one further sensor, the further sensor particularly being an optical sensor for flame detection. The data evaluation unit may further be arranged that for the determination of the grade of deposition of combustion residues on the burner face additionally also further signals from the at least one further sensor is evaluated. For example the discussed inventive burner arrangement may be modified such that other measurands are considered, e.g. using optical flame detection.

The invention is also directed to a gas turbine engine comprising at least one combustor of the previous kind. Furthermore also a method of operation for determining a grade of deposition of combustion residues on a burner face of a burner body is in the scope of the invention.

To briefly summarise, the invention and embodiments are to measure particularly liquid fuel deposition is a gas turbine combustor at temperature and pressure. Crystals and optical measurement techniques may be utilised. The concepts could be applied to similar processes. Possible applications are, amongst others, development tests on rigs and test engines of gas turbine engines and condition monitoring on customer sites running at low power and or with poor quality fuels.

It has to be noted that embodiments of the invention have been described with reference to different subject matters. In particular, some embodiments have been described with reference to apparatus type claims whereas other embodiments may have been described with reference to methods. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment.

### BRIEF DESCRIPTION OF THE DRAWINGS

Embodiments of the invention will now be described, by way of example only, with reference to the accompanying drawings, of which:

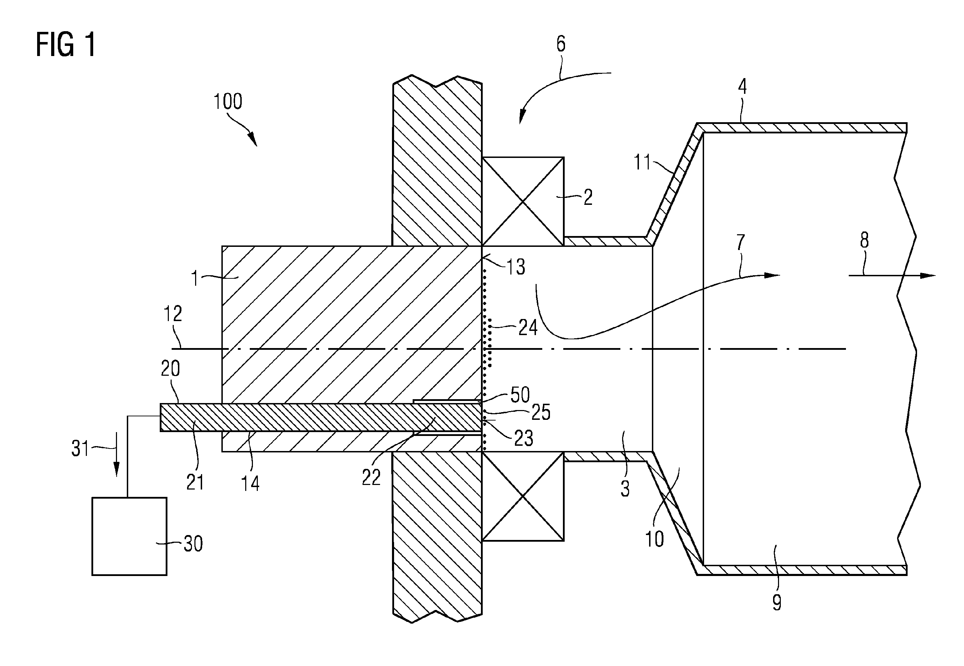

- FIG. 1-4: show schematically a longitudinal section through combustors showing different embodiments of the inventive burner arrangement that all allow determination of deposition.

The illustration in the drawing is schematic. It is noted that for similar or identical elements in different figures, the same reference signs will be used.

Some of the features and especially the advantages will be explained for an assembled and operating gas turbine, but obviously the features can be applied also to the single components of the gas turbine but may show the advantages only once assembled and during operation. But when explained by means of a gas turbine during operation none of the details should be limited to a gas turbine while in operation.

### DETAILED DESCRIPTION OF THE INVENTION

Not shown in the figures, a gas turbine engine comprises a compressor section, a combustor section and a turbine section which are arranged adjacent to each other. In operation of the gas turbine engine air is compressed by the compressor section and the compressed air is provided to the combustor section with one or more combustors. Previously and in the following merely a single combustor is shown and discussed to show the inventive idea.

Figure 1 shows a longitudinal section through a combustor, specifically a combustor within a gas turbine engine (the latter is not shown). The combustor comprises relative to a flow direction: a burner comprising a burner-head and a swirler 2 attached to the burner-head, a transition piece referred to as combustion pre-chamber 3, and a main combustion chamber 4. The burner-head comprises a burner body 1 or may be the same as the burner body 1. The main combustion chamber 4 has for example a diameter being larger than the diameter of the pre-chamber 3. The main combustion chamber 4 is connected to the pre-chamber 3 via a dome portion 10 comprising a dome plate 11. The burner and the combustion chamber assembly (the latter comprising the pre-chamber 3, the dome portion 10, and the main combustion chamber 4) show substantially - at least in parts - rotational symmetry about a longitudinally symmetry axis 12.

A fuel supply (not shown) is provided for leading gaseous and/or liquid fuel to the burner which is to be mixed with inflowing air 6 - particularly compressed air from a compressor (not shown) - in the swirler 2 and/or in the pre-chamber 3. By the swirler 2, the fuel and the air is mixed during operation of the gas turbine engine. The resulting fuel/air mixture 7 is then guided towards the primary combustion zone 9 where it is burnt to form hot, pressurised exhaust gases 8 flowing in a direction indicated by arrows to a downstream turbine section (not shown) of the gas turbine engine.

The swirler 2 shown is indicated as a radial swirler but alternatively also for example an axial swirler could be used in combination with the invention.

According to figure 1, the burner body 1 may particularly be a solid component with potentially some cut outs or passages through its solid body, e.g. for guiding fluid. Particularly it comprises a cut-out 14 which pierces a burner face 13. The cut-out 14 may match substantially the size of a sensor device 20 which is installed in the cut-out 14. The sensor device 20 comprises a first part 21 which is fixed to the burner body 1 and is located at the far end of the sensor device 20 in relation to the burner face 13. The sensor device 20 further comprises a second part 22 at the near end of the sensor device 20 in relation to the burner face 13. The second part 22 comprises a tip surface 23 on which combustion residues like soot may be deposited during operation of the burner. These deposited combustion residues will be called depositions 25 in the following.

According to the depicted embodiment of figure 1, the cut-out 14 may have a wider diameter at the burner face 13 so that a circumferential clearance 50 is arranged around the second part 22 of the sensor device 20. The circumferential clearance 50 may be dimensioned in length along the sensor device 20 and in distance between a casing of the sensor device 20 and a surround wall of the cut-out 14, so that the second part 22 is able to move relative to the burner face 13. In other words, the sensor device 20 and or the cut-out 14 are configured such that the second part 22 is able to move or oscillate relative to the burner face 13. In this case the casing of the sensor device 20 is flexible to allow movements of the second part 22.

Alternatively, the sensor device 20 and the cut-out 14 match over the whole length of the cut-out 14. No wider area is present in the cut-out 14. In this case the sensor device 20 is arranged such that the casing of the sensor device 20 remains fixed in position but allows due to internal configuration to allow the second part 22 as an internal part of the sensor device 20 to move relative to the casing.

These configurations allow experiencing or recognising a frequency and/or an amplitude in movement of the second part 22 during operation of the burner, as vibrations of the burner body 1 will directly affect the sensor device 20. The first part 21 of the sensor device 20 will vibrate the same way as the burner body 1. The second part 22 may lag behind or may result in an oscillation or rocking due to its flexibility. This oscillation is dependent on the mass that is in motion. The mass in motion will change once deposition 25 occurs on the tip surface 23 of the second part 22. So a magnitude and/or a period of the pendular movement of the second part 22 will change. According to the invention this effect will now be further analysed.

For analysis a data evaluation unit 30 is present that is provided with information signals 31 from the sensor device 20. The data evaluation unit 30 is arranged to collect the received information signals 31 which are generated by the sensor device 20 and corresponds to the magnitude and/or the period of the oscillation of the second part 22 relative to the first part 21. The data evaluation unit 30 collects this information over a period of time and determines a grade of deposition of combustion residues on the burner face 13 by evaluating the collected information signals 31.

To be more precise, during operation of the gas turbine engine deposition 24 may take place on the burner face 25. Furthermore, in the same way or even increased by different options like using adhesive material on the tip surface 23, also deposition 25 may take place on the tip surface 23. The deposition 25 may be directly related to the deposition 24.

As said, during operation the first part 21 is fixed to the burner body 1) such that it is agitated by vibrations of the burner body 1 and the burner face 13 and the tip surface 23) are arranged such that they are affected by deposition 24, 25 of combustion residues. The sensor device 20 is arranged to generate information signals 31 corresponding to the movement of the second part 22 relative to the first part 21. This information is provided to the data evaluation unit 30, which preferably may be a separate unit as depicted in figure 1 or which may also be an integral part of the sensor device 20. This data evaluation unit 30 now is able determine - e.g. calculate or by executing comparisons, for example in relation to thresholds - the grade of deposition 24 of combustion residues on the burner face 13 by evaluating the collected information signals 31, which in theory only define the grade of deposition 25 on the tip surface 23.

As the deposition 24 will not need to be specified in weight or height but simply in a range of how much deposition has taken place on a scale of different levels - e.g. level 1 representing a clean surface, level 2 representing minor deposition, ... - the invention allows to determine the grade of soot or deposition 24 on the burner face 1. Alternatively even the exact weight of deposition 25 may be able to calculate by the data evaluation unit 30 if necessary.

This burner arrangement as presented addresses problems with operation of gas turbine engines with gas oil at low power. In that mode of operation combustion is inefficient and there may be a built-up of soot in the combustor, particularly the head. It allows to measure deposition in a high temperature location in which previously no instrumentation was available to measure deposition. It allows evaluating results without dismantling the combustion system and manually inspecting it.

The inventive burner arrangement allows speeding up development work and reducing labour costs. It can be used on test engines but also at customer sites which experience problems with "problematic fuels". The burner arrangement allows on-line measurement even from a remote location instead of manual intervention.

For better evaluation, the burner arrangement may also be combined with other measurements for advanced condition monitoring. Other sensors - e.g. temperature sensor and/or flame detection sensor and/or pressure sensor - give the opportunity for gathering additional information for engine control and or condition monitoring of the gas turbine engine.

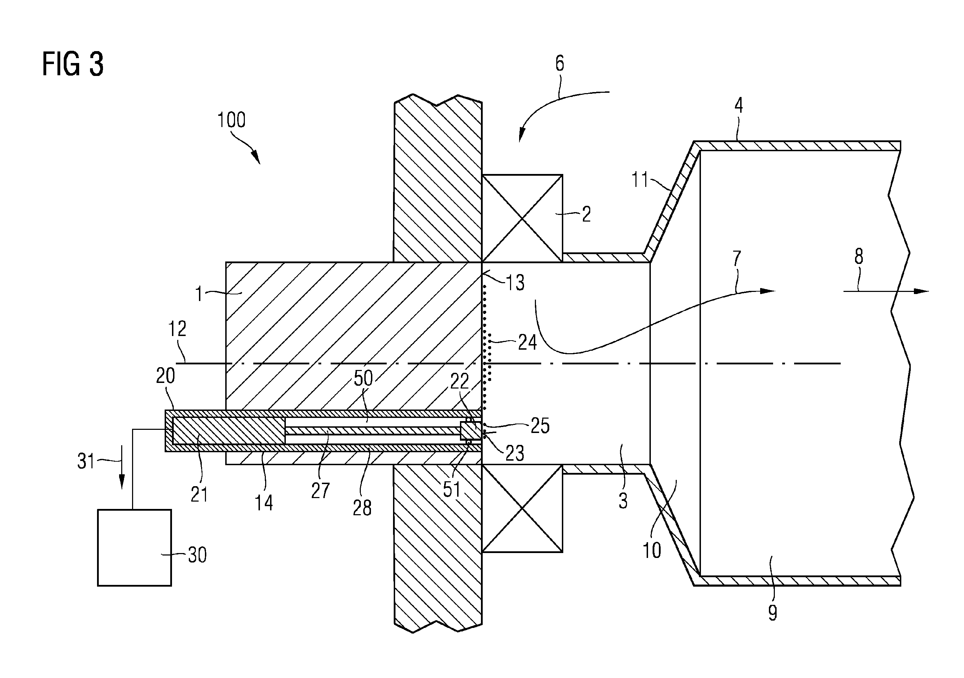

As discussed, the moving second part 22 may have a clearance to an opposing wall. This may be simply a void which may also be sealed by a sealing element (not shown - a sealing element 51 is only shown in figure 3 but could be provided in all discussed embodiments) so that no combustion gases or soot can enter the void. The sealing element may be flexible. Alternatively the clearance may be filled by a gel-type, liquid, or gaseous fluid to not allow combustion gases to enter the opening but still allowing movements of the second part 22.

Based on figure 1, a modification of the previous burner arrangement can be seen. The tip surface 23 is modified such that a diaphragm 40 as a collector of deposition is arranged at the burner face end of the second part 22. The diaphragm allows a higher amount of collection of soot or deposition. The diaphragm is advantageous as it increases sensitivity of the measurement.

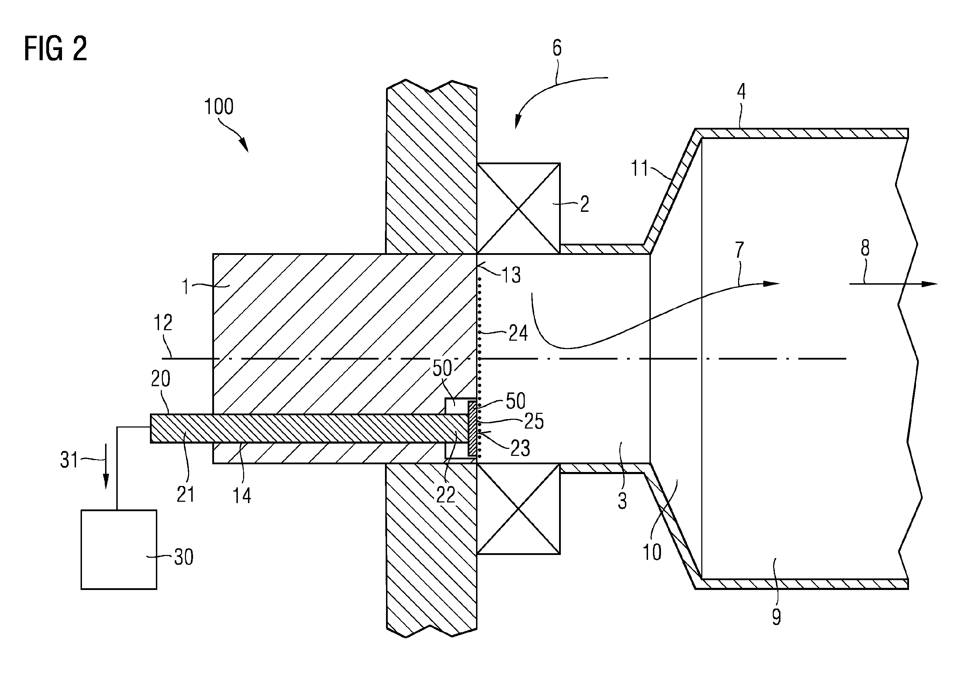

The cut-out 13 in figure 2 again has a wider diameter in the area of the second part 22 to provide a clearance 50 for allowing the second part 22 to oscillate.

Potentially again a seal (not shown) could be present at a circumference of the diaphragm 40 to seal a gap between the diaphragm 40 and the surrounding wall of the cut-out 14 of the burner body 1.

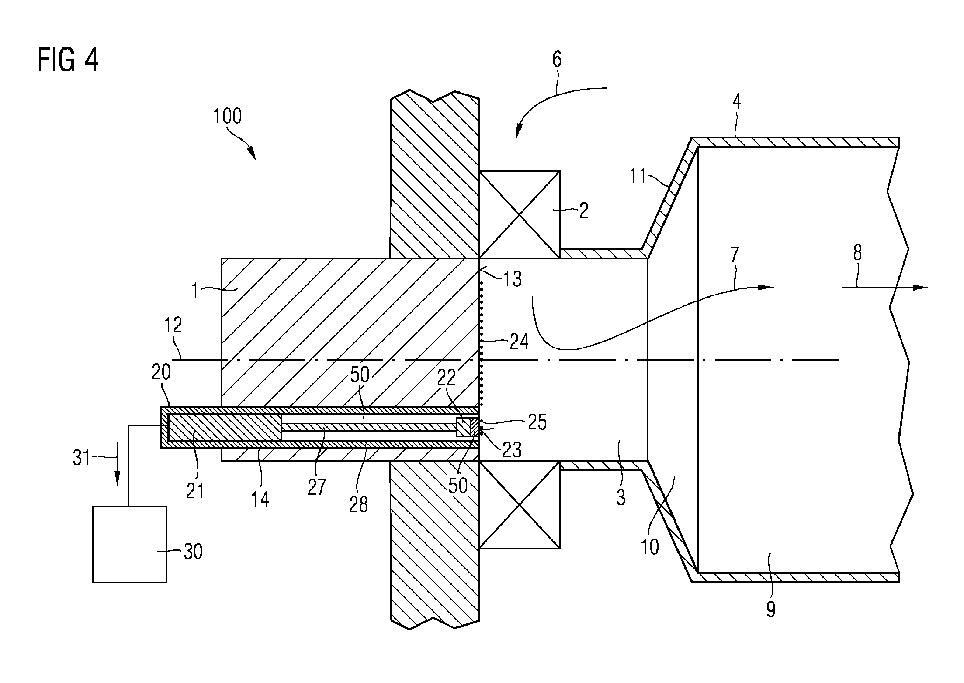

Figure 3 and 4 address a solution in which the second part 22 will move in relation to a casing 28 of the sensor device 20, in which the casing itself 28 will be fixed and will not bend.

Internally of the sensor device 20, the first part 21 will be again at the far end of the sensor device 20 in relation to the burner face 13. The second part 22 will again be at the near end of the sensor device 20 in relation to the burner face 13 and will have a tip surface 23 that will directly be affected by the combustion within the combustor. According to figures 3 and 4 the first part 21 and the second part 22 are connected by a elongated, substantially flexible element, preferably in form of a cylinder, particularly a slender cylinder. Therefore in the following it will be called flexible cylinder 27. The flexible cylinder 27 will be fixed in position at its end attached to the first part 21 but will allow excitation of the second part 22 attached to its other end in a direction perpendicular to the axis of the flexible cylinder 27. So "flexible" must be understood as a body that allows bending. Nevertheless it will be substantially stiff in respect that bending may not exceed a specific value. Particularly an inner wall of the surrounding casing 28 should not be touched by the second part 22 when excited.

According to figure 3, the tip surface 23 may be similar to figure 1 a side face of the second part 22.

During operation, due to vibration of the burner body 1, the first part 21, which is firmly connected - as before - to the burner body 1 the second part 22 will be oscillated as a result of the vibrations. The further steps are as explained before, information signals 31 get generated and provided to the data evaluation unit 30 which determines a grade of deposition 24 of combustion residues on the burner face 13 by evaluating the collected information signals 31.

Figure 4 shows a slight modification in which, similar to figure 2, a diaphragm 40 is added to second part 22, so that the tip surface 23 is built by the diaphragm 40.

Both configurations shown in figure 3 and 4, but also the configurations of figure 1 and 2 may lead to improved reliability if the second part 22 is actively excited by a further excitation source or vibration stimulating device (not shown) and not only by the vibration of the burner body 1. Thus, an external source of exciting the second part 22 may be sued. An active excitation may guarantee higher amplitude compared to non-excited configuration. This may increase sensitivity. Preferably the vibration stimulating device should apply a low base frequency, low compared to the vibrations of the burner body 1. As the vibration stimulating device the rotating shaft may be used, if particularly a direct mechanical connection is provided between the gas turbine engine shaft and the sensor device 20, e.g. by integrating a part like a cam shaft having cam followers that apply a rocking motion to the second part 22. This may lead to a base oscillation of the second part 22 independently of the vibration of the burner body 1.

Alternatively to the stimulating of forced oscillations, the opposite may be advantageous in other situations. In such a situation it may be a goal to use a means for disconnecting excitation for the operating condition e.g. rotor speed or load. In this situation only the vibration of the burner body 1 will affect the sensor device and not rotating parts of the gas turbine engine. So decoupling means between the burner body and the rotating parts should be included in the burner arrangement 100.

Both configurations shown in figure 3 and 4 may again have a seal 51 (only shown in figure 3) at a circumference wall of the second part 22 or of the diaphragm 40 to disallow ingress of combustion gases into the sensor device 20. The same means as discussed before can be used.

For all configurations of figures 1 to 4, high temperature optical sensors could be used. Potentially crystals could be incorporated into the sensor and optical interference measurements can be taken as a measurement of vibration frequency.

As said, the burner arrangement may particularly be advantageous for systems that experience coking or soot deposition. This may happen by running a gas turbine engine on low power when using liquid fuel. Furthermore coking can also be experienced with poor quality liquid fuels, e.g. specific types of diesel or heating oils. Problems potentially could also be experienced with gas fuels, i.e. coke oven gas or with heavy hydrocarbons. For these situations the burner arrangement according to the invention allows monitoring of depositions within the burner without dismantling parts and without stopping the engine. Also the "speed" of deposition over time can be evaluated based on the compiled information.

## Claims

1. Burner arrangement (100) for a combustor of a gas turbine engine comprising
- a burner body (1) comprising a cut-out (14) and a burner face (13), the cut-out (14) piercing the burner face (13), and
- a sensor device (20) installed in the cut-out (14) and comprising a first part (21) being fixed to the burner body (1) and comprising a second part (22), the second part (22) comprising a tip surface (23), the sensor device (20) being configured such that the second part (22) is able to move relative to the burner face (13), and
- a data evaluation unit (30),
wherein
a) the first part (21) is fixed to the burner body (1) such that it is agitated by vibrations of the burner body (1) during operation of the gas turbine engine, and
b) the burner face (13) and the tip surface (23) are arranged such that they are affected by deposition (24, 25) of combustion residues during operation of the gas turbine engine, and
c) the sensor device (20) is arranged to generate information signals (31) corresponding to a magnitude and/or a period of the oscillation of the second part (22) relative to the first part (21), and
d) the data evaluation unit (30) is arranged to collect the received information signals (31) over a period of time and to determine a grade of deposition (24, 25) of combustion residues on the burner face (13) by evaluating the collected information signals (31).

2. Burner arrangement (100) according to claim 1,
**characterised in that**
the second part (22) comprises a diaphragm (40) and that the tip surface (23) is a surface of the diaphragm (40), the diaphragm (40) being arranged to collect combustion residues.

3. Burner arrangement (100) according to claim 2,
**characterised in that**
the surface of the diaphragm (40) is oriented parallel to the burner face (13), particularly the surface of the diaphragm (40) lies within the plane of the burner face (13) .

4. Burner arrangement (100) according to claim 1,
**characterised in that**
the tip surface (23) is of a material and/or of a surface structure adhesive to particles of combustion residues.

5. Burner arrangement (100) according to one of the preceding claims,
**characterised in that**
the sensor device (20) comprises an optical system for measuring a diversion of light transmission and/or for measuring optical interferences of light transmissions.

6. Burner arrangement (100) according to one of the preceding claims,
**characterised in that**
the sensor device (20) comprises at least one strain gauge attached to the second part (22).

7. Burner arrangement (100) according to one of the preceding claims,
**characterised in that**
the burner body (1) and/or the sensor device (20) being configured such that the burner arrangement (100) comprises a circumferential clearance (50) between the second part (22) and surrounding walls to allow the movements relative to the burner face (13), the surrounding walls being particularly walls of the cut-out (14).

8. Burner arrangement (100) according to one of the preceding claims,
**characterised in that**
the first part (21) and/or the second part (22) are configured such that the second part (22) is excited from vibrations by the burner body (1) and/or from vibrations of rotating parts of the gas turbine engine during operation of the gas turbine engine.

9. Burner arrangement (100) according to one of the preceding claims,
**characterised in that**
the burner arrangement (100) comprises a vibration stimulating device for exciting the second part (22).

10. Combustor comprising a burner arrangement (100),
**characterised in that**
the burner arrangement (100) is arranged according to any of the claims 1 to 9.

11. Combustor according to claim 10,
**characterised in that**
the combustor further comprises at least one further sensor, the further sensor particularly being an optical sensor for flame detection, and
the data evaluation unit (30) is further arranged that for the determination of the grade of deposition (24, 25) of combustion residues on the burner face (13) additionally also further signals from the at least one further sensor is evaluated.

12. A gas turbine engine comprising at least one combustor,
**characterised in that**
one of the at least one combustors is arranged according to any of the claims 10 to 11.

13. A method for determining a grade of deposition (24, 25) of combustion residues on a burner face (13) of a burner body (1), particularly arranged in a combustor of a gas turbine engine, the burner body (1) comprising a cut-out (14) and a burner face (13), the cut-out (14) piercing the burner face (13), and a sensor device (20) installed in the cut-out (14) and comprising a first part (21) being fixed to the burner body (1) and comprising a second part (22), the second part (22) comprising a tip surface (23), the sensor device (20) being configured such that the second part (22) is able to move relative to the burner face (13), the first part (21) being fixed to the burner body (1), and the burner face (13) and the tip surface (23) are arranged such that they are affected by deposition (24, 25) of combustion residues during operation of the gas turbine engine,
the method comprising the steps of:
- the sensor device (20) senses vibrations from the first part (21) which is agitated by vibrations of the burner body (1) during operation of the gas turbine engine,
- the sensor device (20) generates information signals (31) based on the sensed vibrations corresponding to a magnitude and/or a period of the oscillation of the second part (22) relative to the first part (21),
- the data evaluation unit (30) collects the received information signals (31) over a period of time,
- the data evaluation unit (30) determines a grade of deposition (24, 25) of combustion residues on the burner face (13) by evaluating the collected information signals (31).
